# EUROPEAN PATENT APPLICATION

(11) **EP 4 769 636 A1**
(43) Date of publication of application: **01.07.2026**
(21) Application number: 25738902.3
(22) Date of filing: 07.01.2025
(51) Int. Cl.: H01M 10/42, G01N 21/892, G01N 21/88

(54) **BATTERY INSPECTION SYSTEM AND BATTERY INSPECTION METHOD**

(30) Priority: 11.01.2024 KR 20240004689; 07.05.2024 KR 20240059710
(71) Applicant: LG Energy Solution, Ltd., Seoul 07335 (KR)
(72) Inventor: KIM, Ji Mo, Daejeon 34122 (KR)
(74) Representative: BCKIP Part mbB
(86) International application number: PCT/KR2025/000279
(87) International publication number: WO 2025/150828

(57) **Abstract**

According to some embodiments, a battery inspection system includes a transport device configured to transport a battery cell, an inspection device configured to generate a plurality of inspection images for the battery cell, and a control device configured to determine a correction value for an appearance dimension of the battery cell based on the plurality of inspection images and determine whether the battery cell is defective based on the correction value.

## Description

### TECHNICAL FIELD

### CROSS-REFERENCE TO RELATED APPLICATION

The present application claims the benefit of the priority of Korean Patent Application No. 10-2024-0059710, filed on May 7, 2024, and Korean Patent Application No. 10-2024-0004689, filed on January 11, 2024, which are hereby incorporated by reference in their entirety.

### TECHNICAL FIELD

Embodiments disclosed herein relate to a battery inspection system and a battery inspection method.

### BACKGROUND ART

In recent years, research and development for secondary batteries have been actively conducted. Here, secondary batteries are batteries capable of being recharged and discharged, and may be interpreted to encompass both conventional Ni/Cd batteries, Ni/MH batteries, or the like, and recent lithium ion batteries. Among secondary batteries, lithium ion batteries may have a higher energy density than conventional Ni/Cd batteries, Ni/MH batteries, or the like, and may be manufactured to be small and lightweight, so the lithium ion batteries may have high usability as a power source for mobile devices. In recent years, the lithium ion batteries have expanded their range of use to power sources for electric vehicles, making the batteries attract attention as a next-generation energy storage medium.

In a process of manufacturing cylindrical battery cells, the presence of defects in the battery cells may be inspected using a vision inspection method. As manufactured battery cells pass through a measurement region along a transport line, a vision inspector may photograph each cell to generate a vision image, and battery cell manufacturing defects may be detected based on dimensional information extracted from the vision image. However, it may be problematic that cell dimension values may have significant dispersion due to errors caused by contamination or foreign matter in the vision inspector, or due to deviations in the operation of the equipment that positions each battery cell in the measurement region.

### DISCLOSURE OF THE INVENTION

### TECHNICAL PROBLEM

The embodiments disclosed herein are directed to providing a battery inspection system and a battery inspection method capable of increasing inspection accuracy by minimizing dimensional values of battery cells caused by errors in a vision inspector and/or a transport device.

The technical objectives of the embodiments disclosed herein are not limited to those mentioned above, and other technical objectives not mentioned will be clearly understood by those skilled in the art from the following descriptions.

### TECHNICAL SOLUTION

According to some embodiments, a battery inspection system includes a transport device configured to transport a battery cell, an inspection device configured to generate a plurality of inspection images for the battery cell, and a control device configured to determine a correction value for an appearance dimension of the battery cell based on the plurality of inspection images and determine whether the battery cell is defective based on the correction value.

According to some embodiments, the transport device is configured to transport the battery cell along a rotation path and photograph the battery cell that is transported along the rotation path from a plurality of different angles to generate the plurality of inspection images.

According to some embodiments, the transport device is configured to rotate the battery cell at a constant angular interval in a measurement region in the rotation path and the inspection device is configured to generate the plurality of inspection images at the constant angular interval.

According to some embodiments, the transport device includes a plurality of disks configured to transport the battery cell along the rotation path, a first transport line configured to supply the battery cell to the plurality of disks, and a second transport line configured to transport the battery cell supplied from the plurality of disks.

According to some embodiments, the control device is configured to extract a plurality of appearance dimensions corresponding to the plurality of inspection images, determine whether an appearance dimension including measurement noise is present among the plurality of appearance dimensions, and determine the correction value based on at least some of remaining appearance dimensions excluding the appearance dimension including the measurement noise among the plurality of appearance dimensions.

According to some embodiments, the control device is configured to determine a manufacturing quality of the battery cell based on the appearance dimension including the measurement noise and adjust the number of the plurality of inspection images and the constant angular interval based on the manufacturing quality.

According to some embodiments, the control device is configured to adjust transport parameters of the transport device based on the manufacturing quality, and the transport parameters include rotational speeds of the plurality of disks, a transport speed of the first transport line, and a transport speed of the second transport line.

According to some embodiments, the transport device includes a normal cell transport line configured to transport a battery cell determined to be normal and a defective cell transport line configured to transport a battery cell determined to be defective, and the defective cell transport line is configured to transport the battery cell determined to be defective back to the rotation path for re-inspection.

According to some embodiments, the control device is configured to adjust the number of the plurality of inspection images and the constant angular interval when the battery cell transported to the rotation path back in for re-inspection is inspected.

According to some embodiments, a battery inspection method includes transporting a battery cell through a transport device, generating a plurality of inspection images of the battery cell through an inspection device, determining a correction value for an appearance dimension of the battery cell based on the plurality of inspection images through a control device, and determining, through the control device, whether the battery cell is defective based on the correction value.

According to some embodiments, the transporting of the battery cell includes transporting the battery cell along a rotation path, and the generating of the plurality of inspection images includes photographing the battery cell that is transported along the rotation path from a plurality of different angles to generate the plurality of inspection images.

According to some embodiments, the transporting of the battery cell includes rotating the battery cell at a constant angular interval in a measurement region in the rotation path, and the generating of the plurality of inspection images includes generating the plurality of inspection images at the constant angular interval.

According to some embodiments, the transport device includes a plurality of disks configured to transport the battery cell along the rotation path, a first transport line configured to supply the battery cell to the plurality of disks, and a second transport line configured to transport the battery cell supplied from the plurality of disks.

According to some embodiments, the determining of the correction value includes extracting a plurality of appearance dimensions corresponding to the plurality of inspection images, determining whether an appearance dimension including measurement noise is present among the plurality of appearance dimensions, and determining the correction value based on at least some of remaining appearance dimensions excluding the appearance dimension including the measurement noise among the plurality of appearance dimensions.

According to some embodiments, the battery inspection method further includes determining, through the control device, e a manufacturing quality of the battery cell based on the appearance dimension including the measurement noise and adjusting, through the control device, the number of the plurality of inspection images and the constant angular interval based on the manufacturing quality.

According to some embodiments, the battery inspection method further includes adjusting, through the control device, transport parameters of the transport device based on the manufacturing quality, and the transport parameters include rotational speeds of the plurality of disks, a transport speed of the first transport line, and a transport speed of the second transport line.

According to some embodiments, the transport device includes a normal cell transport line configured to transport a battery cell determined to be normal and a defective cell transport line configured to transport a battery cell determined to be defective, and the defective cell transport line is configured to transport the battery cell determined to be defective back to the rotation path for re-inspection.

According to some embodiments, the battery inspection method further includes adjusting, through the control device, the number of the plurality of inspection images and the constant angular interval when the battery cell transported to the rotation path back in for re-inspection is inspected.

### ADVANTAGEOUS EFFECTS

According to the embodiments disclosed herein, a battery inspection system and a battery inspection method capable of increasing inspection accuracy by minimizing dimensional values of battery cells caused by errors in a vision inspector and/or a transport device can be provided.

The technical effects according to the embodiments disclosed herein are not limited to those mentioned above, and other effects not mentioned will be clearly understood by those skilled in the art from the disclosure herein.

### BRIEF DESCRIPTION OF THE DRAWINGS

FIG. 1 illustrates a method in which a battery inspection system operates according to some embodiments.
FIG. 2 illustrates elements constituting a battery inspection system according to some embodiments.
FIG. 3 illustrates the structure of a battery inspection system that generates an inspection image while moving a battery cell along a rotation path according to some embodiments.
FIG. 4 illustrates a method of extracting appearance dimensions of a battery cell from an inspection image according to some embodiments.
FIG. 5 illustrates a method of reducing the dispersion of appearance dimensions of a battery cell according to some embodiments.
FIG. 6 illustrates a table for describing a method of generating a correction value of an appearance dimension based on a plurality of measured dimension values according to some embodiments.
FIG. 7 illustrates steps constituting a battery inspection method according to some embodiments.

### MODE FOR CARRYING OUT THE INVENTION

Hereinafter, embodiments disclosed in herein will be described with reference to the accompanying drawings. However, this is not intended to limit the disclosure herein to the specific embodiments, and it is to be construed to include various modifications, equivalents, and/or alternatives of embodiments disclosed herein.

It should be appreciated that embodiments herein and the terms used therein are not intended to limit the technological features set forth herein to particular embodiments and include various changes, equivalents, or replacements for a corresponding embodiment. With regard to the description of the drawings, similar or related reference numerals may be used to refer to similar or related elements. It is to be understood that a singular form of a noun corresponding to an item may include one or more of the things, unless the relevant context clearly indicates otherwise.

As used herein, each of phrases such as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "1st," "2nd," "first," "second," "A," "B," "(a)," or "(b)" may be used to simply distinguish a corresponding component from another, and do not limit the components in other aspects (e.g., importance or order) unless specifically stated otherwise.

In the present specification, it is to be understood that if an element (e.g., a first element) is referred to, with or without the term "operatively" or "communicatively," as "connected to," "coupled to," or "in contact with" another element (e.g., a second element), it means that the element may be connected to the other element directly (e.g., by wire or wirelessly) or indirectly (e.g., via a third element).

A method according to various embodiments disclosed herein may be included and provided in a computer program product. The computer program product may be traded as a product between a seller and a buyer. The computer program product may be distributed in the form of a machine-readable storage medium (e.g., a compact disc read only memory and CD-ROM), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to embodiments disclosed herein, each component (e.g., a module or a program) of the above-described components may include a single entity or multiple entities, and some of the plurality of entities may be disposed separately from other components. According to embodiments disclosed herein, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as those performed by a corresponding one of the plurality of components before the integration. According to embodiments disclosed herein, operations performed by the module, the program, or another component may be carried out sequentially, in parallel, repeatedly, or heuristically, or one or more of the operations may be executed in a different order or omitted, or one or more other operations may be added.

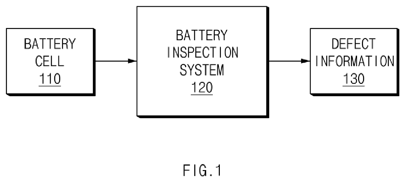

FIG. 1 illustrates a method in which a battery inspection system operates according to some embodiments.

Referring to FIG. 1, a battery inspection system 120 may inspect a battery cell 110 to generate defect information 130. The battery cell 110 may be manufactured through a manufacturing process and inspected by the battery inspection system 120 immediately after being manufactured.

The battery cell 110 may include a cylindrical battery cell. The cylindrical cell may be manufactured using a cylindrical manufacturing process. According to an embodiment, the cylindrical cell may be manufactured through a stacking process for electrodes and a separator, a winding process for an electrode/separator assembly, a process of sealing a winding resultant into a can, and the like.

The battery inspection system 120 may include a system for inspecting whether the battery cell 110 has been properly manufactured. When the battery cell 110 is manufactured through the stacking process, the winding process, the sealing process, and the like, in a process line, the battery inspection system 120 may inspect whether the battery cell 110 satisfies standard specifications. According to an embodiment, the battery inspection system 120 may inspect the quality of the battery cell 110 based on an appearance dimension of the battery cell 110.

The defect information 130 may include information on whether the battery cell 110 is defective. According to an embodiment, the defect information 130 may be determined based on the appearance dimension of the battery cell 110. The defect information 130 may indicate whether the stacking process, the winding process, the sealing process, and the like, for the battery cell 110 have been properly performed.

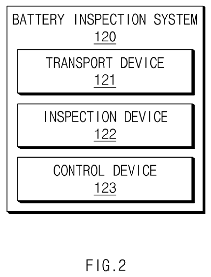

FIG. 2 illustrates elements constituting a battery inspection system according to some embodiments.

Referring to FIG. 2, a battery inspection system 120 may include a transport device 121, an inspection device 122, and a control device 123. However, the battery inspection system is not limited thereto, and some components may be omitted from the battery inspection system 120, or other general-purpose components may be further included in the battery inspection system 120.

The transport device 121 may include a means for transporting the manufactured battery cell 110 to an inspection position. According to an embodiment, the transport device 121 may include a transport means such as a conveyor belt, a rotating disk, or the like. The transport device 121 may transport a manufactured battery cell 110 along a rotation path, and a measurement region may be formed on the rotation path.

The inspection device 122 may inspect the battery cell 110 transported by the transport device 121 to generate inspection data. According to an embodiment, the inspection device 122 may photograph the battery cell 110 to generate an inspection image. To this end, the inspection device 122 may include a vision inspector such as a camera, image sensor, or the like. When the battery cell 110 is transported to the measurement region by the transport device 121, the inspection device 122 may generate a plurality of pieces of inspection data for the battery cell 110.

The control device 123 may determine whether the battery cell 110 is defective based on the plurality of pieces of inspection data for the battery cell 110. The control device 123 may control the operations of the transport device 121 and the inspection device 122. According to an embodiment, the control device 123 may remove noise from the plurality of pieces of inspection data, and may determine whether the battery cell 110 is defective through statistical processing on the remaining data from which the noise has been removed.

The control device 123 may have a general-purpose memory and processor structure. The memory may include a read-only memory (ROM), programmable ROM (PROM), an erasable programmable ROM (EPROM), an electrically erasable PROM (EEPROM), a flash memory, a parallel random-access memory (PRAM), a magneto-resistive RAM (MRAM), a resistive RAM (RRAM), a ferroelectric RAM (FRAM), a dynamic RAM (DRAM), a static RAM (SRAM), a synchronous dynamic RAM (SDRAM), a parallel RAM (PRAM), a hard disk drive (HDD), a solid state drive (SSD), a secure digital (SD), a Micro-SD, or a combination thereof. The processor may include a microprocessor, a central processing unit (CPU), a graphics processing unit (GPU), an application processor (AP), or a combination thereof. The processor may perform control operations by executing data, instructions, programs, software, applications, or the like, stored in the memory.

The transport device 121 may be configured to transport the battery cell 110 along the rotation path. When the battery cell 110 is manufactured through the stacking process, the winding process, the sealing process, and the like, the transport device 121 may transport the manufactured battery cell 110 to the inspection position along the rotation path. According to an embodiment, the rotation path may be implemented through one or more disks, and the inspection position of the battery cell 110 may be adjusted by the rotation angle of the disk.

The inspection device 122 may be configured to photograph a battery cell 110 that is being transported along the rotation path from a plurality of different angles to generate a plurality of inspection images. The battery cell 110 may be positioned at a plurality of angles in an inspection region by the transport device 121, and the inspection device 122 may photograph the battery cell 110 at each of the plurality of angles to generate the inspection images.

The control device 123 may be configured to determine a correction value for an appearance dimension of the battery cell 110 based on the plurality of inspection images. According to an embodiment, the control device 123 may extract a plurality of appearance dimension values from the plurality of inspection images, may perform noise removal and statistical processing on the plurality of appearance dimension values, and may use the results to determine the correction value for the appearance dimensions of the battery cell 110.

The control device 123 may be configured to determine whether the battery cell 110 is defective based on the correction value. According to an embodiment, a normal range of the appearance dimension may be preset, and a determination as to whether the battery cell 110 is defective may be made based on whether the correction value for the appearance dimension of the battery cell 110 is out of the normal range.

According to an embodiment, the transport device 121 may be configured to rotate the battery cell 110 at a constant angular interval in a measurement region in the rotation path, and the inspection device 122 may be configured to generate the plurality of inspection images at the constant angular interval. For example, the constant angular interval may be 15°, 12°, 10°, 8°, 5°, 3°, 2°, 1°, or the like, and may be changed to other values as needed. The inspection device 122 may photograph the battery cell 110 at each angle within the measurement region.

According to an embodiment, the transport device 121 may include a plurality of disks configured to transport the battery cell 110 along the rotation path, a first transport line configured to supply the battery cell 110 to the plurality of disks, and a second transport line configured to transport the battery cell 110 supplied from the plurality of disks. The rotation path may be formed by a plurality of disks, and the inspection region may be included within the rotation path. The manufactured battery cell 110 may be supplied to the plurality of disks through the first transport line, and the inspected battery cell 110 may be transported to a re-inspection line or a packaging line through the second transport line.

According to an embodiment, the control device 123 is configured to extract a plurality of appearance dimensions corresponding to the plurality of inspection images, determine whether an appearance dimension including measurement noise is present among the plurality of appearance dimensions, and determine the correction value based on at least some of remaining appearance dimensions excluding the appearance dimension including the measurement noise among the plurality of appearance dimensions. For example, when there is contamination or foreign matter in the lens or photographing means of the inspection device 122, the inspection image may include noise. A determination as to whether there is noise in the appearance dimension extracted from each inspection image may be statistically made. A standard value for determining noise may be changed according to a required value of the battery inspection system 120. Since the correction value may be determined based on the remaining appearance dimensions excluding the noise dimension, the dispersion due to measurement error may be reduced and the inspection performance may be improved.

According to an embodiment, the control device 123 may be configured to determine a manufacturing quality of the battery cell 110 based on the appearance dimension including the measurement noise and adjust the number of the plurality of inspection images and the constant angular interval based on the manufacturing quality. For example, the manufacturing quality of the battery cell 110 may be determined based on the number and/or a deviation of the appearance dimension including the measurement noise. The deviation may be from a mean or a median. When a ratio of noise cells is excessively high or the noise deviation is excessively large, the quality of the stacking process, winding process, and/or sealing process may be evaluated as poor. In this case, the number of the plurality of inspection images may be increased and the constant angular interval may be decreased to further tighten an inspection standard and improve inspection accuracy. In this way, a situation in which an unsuitable battery cell 110 is mistakenly determined as a normal cell may be prevented.

According to an embodiment, the control device 123 may be configured to adjust transport parameters of the transport device 121 based on the manufacturing quality, and the transport parameters may include rotational speeds of the plurality of disks, a transport speed of the first transport line, and a transport speed of the second transport line. The time required to inspect the battery cell 110 may be changed by the transport parameters. For example, when the manufacturing quality is determined to be poor, in order to increase the time required for inspection so that more accurate inspection is performed, the rotational speed and transport speed of the transport device 121 may be reduced. Conversely, when the current manufacturing quality exceeds a reference value and thus is determined to be very high, in order to improve inspection efficiency, the rotational speed and transport speed of the transport device 121 may be increased.

According to an embodiment, the transport device 121 may include a normal cell transport line configured to transport a battery cell 110 determined to be normal and a defective cell transport line configured to transport a battery cell 110 determined to be defective, and the defective cell transport line may be configured to transport the battery cell 110 determined to be defective back to the rotation path for re-inspection. The control unit 123 may control the transport device 121 depending on whether the battery cell 110 is defective or not, and transport the battery cell 110 to the normal cell transport line or the defective cell transport line. The normal cell transport line may transport the battery cell 110 to the packaging line, and the defective cell transport line may transport the battery cell 110 to a position for re-inspection. The position for re-inspection may be a starting point of the rotation path.

According to an embodiment, the control device 123 may be configured to adjust the number of the plurality of inspection images and the constant angular interval when the battery cell 110 transported back to the rotation path for re-inspection is inspected. Re-inspection of the battery cell 110 already determined to be defective may be performed to a higher standard. To this end, the number of the plurality of inspection images may be increased and the constant angular interval may be decreased. Therefore, the battery cell 110 to be re-inspected may be diagnosed more accurately than the previous inspection.

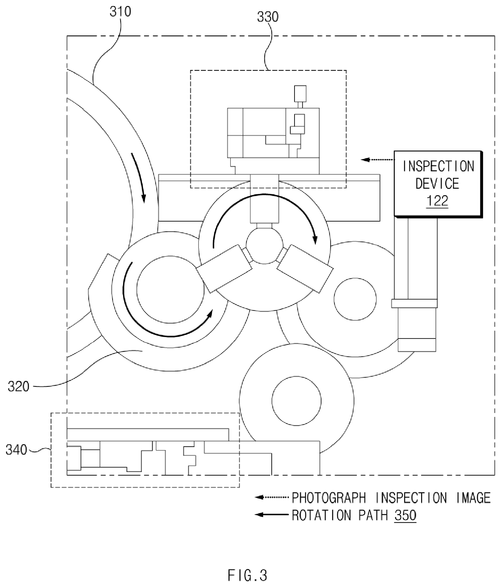

FIG. 3 illustrates the structure of a battery inspection system that generates an inspection image while moving a battery cell along a rotation path according to some embodiments.

Referring to FIG. 3, the battery cell 110 may be transported along a first transport line 310, a plurality of disks 320, and a second transport line 340. The battery cell 110 may be photographed by the inspection device 122 in a measurement region 330 on a rotation path 350.

The first transport line 310 may transport the manufactured battery cell 110 to the plurality of disks 320. The plurality of disks 320 may form the rotation path 350. The plurality of disks 320 may rotate the battery cell 110 at a constant angular interval in the measurement region 330 on the rotation path 350.

The inspection device 122 may photograph the battery cell 110 at the constant angular interval in the measurement region 330 to generate an inspection image. Once the generation of the inspection image is complete, the plurality of disks 320 may transport the battery cell 110 to the second transport line 340. The second transport line 340 may transport the battery cell 110 to one of a normal cell transport line or a defective cell transport line depending on whether the battery cell 110 is defective.

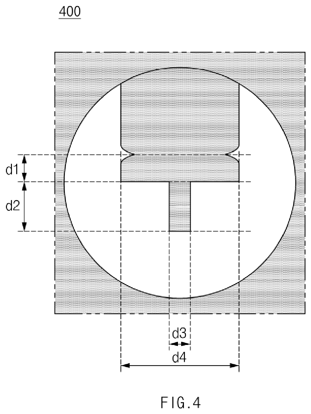

FIG. 4 illustrates a method of extracting appearance dimensions of a battery cell from an inspection image according to some embodiments.

Referring to FIG. 4, the method of extracting appearance dimensions of the battery cell 110 from an inspection image 400 may be illustrated. The inspection image 400 may include an image obtained by photographing the battery cell 110 rotating at a constant angular interval in the measurement region.

According to an embodiment, the battery cell 110 may be a cylindrical battery cell. The cylindrical battery cell may be manufactured by sealing a cylindrical jelly roll into a battery can. The inspection image 400 may show the appearance of the battery can sealing the jelly roll.

The battery can of the inspection image 400 may include a body portion and a head portion. The body portion and the head portion may be distinguished by a neck portion. The width of the neck portion may be measured as d3, and the width of the head portion and the body portion may be measured as d4. The height of the head portion may be measured as d1. A protrusion may be formed on the head portion, and the height of the protrusion may be measured as d2.

In addition, a difference between d4 and d3 may be measured. A difference between d4 and d3 may include a left difference value and a right difference value. The appearance dimensions on the inspection image 400 may be extracted through image processing. For example, the appearance dimensions may be calculated based on differences in pixel values or brightness values of the inspection image 400.

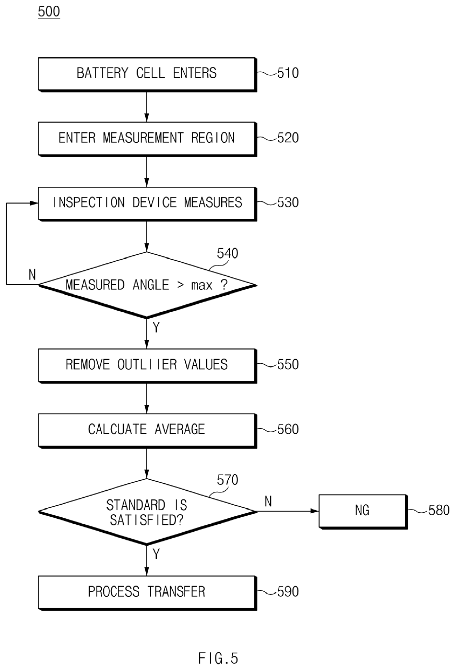

FIG. 5 illustrates a method of reducing the dispersion of appearance dimensions of a battery cell according to some embodiments.

Referring to FIG. 5, a flowchart 500 showing a method of reducing the dispersion of appearance dimensions of a battery cell may be illustrated. The flowchart 500 may include steps 510 to 590.

In step 510, the battery cell 110 may enter the battery inspection system 120. For example, the battery cell 110 may enter the rotation path 350 through the first transport line 310. In step 520, the battery cell 110 may enter the measurement region 330. For example, the measurement region 330 may include an angular range of 325° or more and 355° or less. The angle of the battery cell 110 may be the angle of an encoder that rotates the plurality of disks 320.

In step 530, the inspection device 122 may generate an inspection image by measuring the battery cell 110 at a specific angle included in the measurement region 330. In step 540, a current angle of the battery cell 110 may be compared with a maximum value. When the current angle is less than the maximum value, the measurement of step 530 may be performed again with the angle of the disk encoder increasing by a certain interval.

When the current angle is greater than the maximum value, in step 550, outlier values among a plurality of appearance dimensions corresponding to the plurality of inspection images may be removed. Outlier value removal may be statistically performed. In step 560, an average or median may be calculated for the remaining values from which noise values have been removed.

In step 570, a determination may be made as to whether a correction value of the appearance dimension expressed as the average or median satisfies a set standard. The set standard may include a range of normal values. In step 580, when the correction value is out of the range of normal values, a corresponding battery cell 110 may be diagnosed as NG. The battery cell diagnosed as NG may be transported back to the battery inspection system 120 for re-inspection. In step 590, when the correction value does not exceed the range of normal values, the corresponding battery cell 110 may be diagnosed as normal and may be transported to the next process, such as a packaging line.

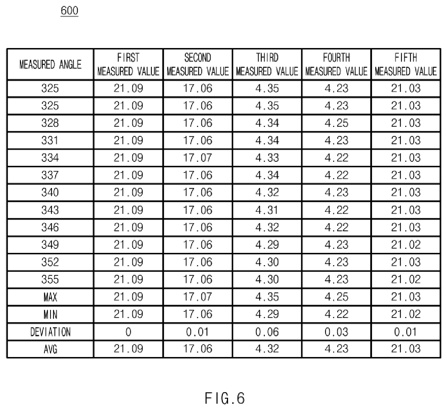

FIG. 6 illustrates a table for describing a method of generating a correction value of an appearance dimension based on a plurality of measured dimension values according to some embodiments.

Referring to FIG. 6, a table 600 may be illustrated to describe a method of generating a correction value of an appearance dimension based on a plurality of measured dimension values.

In the table 600, a range of a measurement region may be an angular range of 325° or more and 355° or less. The angle of the battery cell 110 may be the angle of the disk encoder that rotates the plurality of disks 320. In the measurement region, the angle of the battery cell 110 may increase by a predetermined angular interval. The predetermined angular interval may be 3°. Meanwhile, specific values of the angular range and angular interval may vary depending on a process design.

In table 600, outlier values including noise may not be found in first to fifth measured values. Therefore, outlier value removal may not be performed when calculating the average. However, regarding a standard deviation σ, based on 1σ, 1.5σ, 2σ, 2.5σ, 3σ, and other values, values exceeding these values may be determined as outlier values, and the outlier values may be excluded when calculating the average.

Based on the frequency or size of occurrence of the outlier value, an angular interval of 3° may become larger or smaller, and the transport parameters such as the transport speed and rotation speed of the transport device 121 may be changed. In addition, for the battery cell 110 that are resupplied for re-inspection, the predetermined angular interval and/or transport parameters may be additionally changed, thereby further improving inspection accuracy.

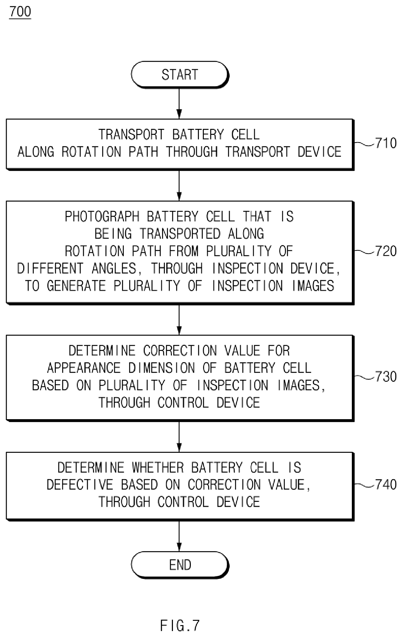

FIG. 7 illustrates steps constituting a battery inspection method according to some embodiments.

Referring to FIG. 7, a battery inspection method 700 may include steps 710 to 740. However, the battery inspection method is not limited thereto, and some steps may be omitted or other general steps may be added, and the steps of the battery inspection method 700 may be executed in a different order than the illustrated order.

The battery inspection method 700 may include steps that are processed in time series in the battery inspection system 120. Therefore, even when the content is omitted below, the content described above for the battery inspection system 120 may be equally applied to the battery inspection method 700.

Steps 710 to 740 of the battery inspection method 700 may be performed by the transport device 121, the inspection device 122, and the control device 123 of the battery inspection system 120.

In step 710, the battery inspection system 120 may perform a step of transporting a battery cell along a rotation path through the transport device.

In step 720, the battery inspection system 120 may perform a step of photographing the battery cell that is being transported along the rotation path from a plurality of different angles, through the inspection device, to generate a plurality of inspection images.

In step 730, the battery inspection system 120 may perform a step of determining a correction value for an appearance dimension of the battery cell based on the plurality of inspection images, through the control device.

In step 740, the battery inspection system 120 may perform a step of determining whether the battery cell is defective based on the correction value, through the control device.

According to an embodiment, the battery inspection method 700 may be implemented in the form of a computer program stored in a computer-readable storage medium. That is, the computer program may include commands for implementing the battery inspection method 700, and the commands of the program may be stored in the computer-readable storage medium. The computer program may include a mobile application.

In an embodiment, a computer-readable storage medium may include magnetic media such as hard disks, floppy disks, and magnetic tapes, optical media such as CD-ROMs and DVDs, magneto-optical media such as floptical disks, and a hardware device specially configured to store and execute computer program instructions, such as ROM, RAM, flash memory, or the like. Computer program instructions may include machine language code generated by a compiler and high-level language code that may be executed by a computer using an interpreter, or the like.

Terms such as "include," "comprise," or "have" described above mean that the corresponding component can be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The above description is merely an example of the technical idea disclosed herein, and those with ordinary skill in the art to which the embodiments disclosed herein belong may make various modifications and variations without departing from the essential characteristics of the embodiments disclosed herein. Accordingly, the embodiments disclosed herein are not intended to limit the technical ideas of the embodiments disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

### (Reference Signs List)

110: Battery cell120: Battery Inspection System
130: Defect information 121: Transport device
122: Inspection device 123: Control device

## Claims

1. A battery inspection system comprising:
a transport device configured to transport a battery cell;
an inspection device configured to generate a plurality of inspection images for the battery cell; and
a control device configured to determine a correction value for an appearance dimension of the battery cell based on the plurality of inspection images and determine whether the battery cell is defective based on the correction value.

2. The battery inspection system of claim 1, wherein the transport device is configured to:
transport the battery cell along a rotation path; and
photograph the battery cell that is transported along the rotation path from a plurality of different angles to generate the plurality of inspection images.

3. The battery inspection system of claim 2, wherein the transport device is configured to rotate the battery cell at a constant angular interval in a measurement region in the rotation path; and
the inspection device is configured to generate the plurality of inspection images at the constant angular interval.

4. The battery inspection system of claim 3, wherein the transport device includes a plurality of disks configured to transport the battery cell along the rotation path, a first transport line configured to supply the battery cell to the plurality of disks, and a second transport line configured to transport the battery cell supplied from the plurality of disks.

5. The battery inspection system of claim 3, wherein the control device is configured to:
extract a plurality of appearance dimensions corresponding to the plurality of inspection images;
determine whether an appearance dimension including measurement noise is present among the plurality of appearance dimensions; and
determine the correction value based on at least some of remaining appearance dimensions excluding the appearance dimension including the measurement noise among the plurality of appearance dimensions.

6. The battery inspection system of claim 5, wherein the control device is configured to:
determine a manufacturing quality of the battery cell based on the appearance dimension including the measurement noise; and
adjust the number of the plurality of inspection images and the constant angular interval based on the manufacturing quality.

7. The battery inspection system of claim 6, wherein the control device is configured to adjust transport parameters of the transport device based on the manufacturing quality, and
the transport parameters include rotational speeds of the plurality of disks, a transport speed of the first transport line, and a transport speed of the second transport line.

8. The battery inspection system of claim 3, wherein the transport device includes a normal cell transport line configured to transport a battery cell determined to be normal and a defective cell transport line configured to transport a battery cell determined to be defective, and
the defective cell transport line is configured to transport the battery cell determined to be defective back to the rotation path for re-inspection.

9. The battery inspection system of claim 8, wherein the control device is configured to adjust the number of the plurality of inspection images and the constant angular interval when the battery cell transported to the rotation path back in for re-inspection is inspected.

10. A battery inspection method comprising:
transporting a battery cell through a transport device;
generating a plurality of inspection images of the battery cell through an inspection device;
determining a correction value for an appearance dimension of the battery cell based on the plurality of inspection images through a control device; and
determining, through the control device, whether the battery cell is defective based on the correction value.

11. The battery inspection method of claim 10, wherein the transporting of the battery cell includes transporting the battery cell along a rotation path, and
the generating of the plurality of inspection images includes photographing the battery cell that is transported along the rotation path from a plurality of different angles to generate the plurality of inspection images.

12. The battery inspection method of claim 11, wherein the transporting of the battery cell includes rotating the battery cell at a constant angular interval in a measurement region in the rotation path, and
the generating of the plurality of inspection images includes generating the plurality of inspection images at the constant angular interval.

13. The battery inspection method of claim 12, wherein the transport device includes a plurality of disks configured to transport the battery cell along the rotation path, a first transport line configured to supply the battery cell to the plurality of disks, and a second transport line configured to transport the battery cell supplied from the plurality of disks.

14. The battery inspection method of claim 12, wherein the determining of the correction value includes:
extracting a plurality of appearance dimensions corresponding to the plurality of inspection images;
determining whether an appearance dimension including measurement noise is present among the plurality of appearance dimensions; and
determining the correction value based on at least some of remaining appearance dimensions excluding the appearance dimension including the measurement noise among the plurality of appearance dimensions.

15. The battery inspection method of claim 14, further comprising:
determining, through the control device, e a manufacturing quality of the battery cell based on the appearance dimension including the measurement noise; and
adjusting, through the control device, the number of the plurality of inspection images and the constant angular interval based on the manufacturing quality.

16. The battery inspection method of claim 15, further comprising adjusting, through the control device, transport parameters of the transport device based on the manufacturing quality,
wherein the transport parameters include rotational speeds of the plurality of disks, a transport speed of the first transport line, and a transport speed of the second transport line.

17. The battery inspection method of claim 12, wherein the transport device includes a normal cell transport line configured to transport a battery cell determined to be normal and a defective cell transport line configured to transport a battery cell determined to be defective, and
the defective cell transport line is configured to transport the battery cell determined to be defective back to the rotation path for re-inspection.

18. The battery inspection method of claim 17, further comprising adjusting, through the control device, the number of the plurality of inspection images and the constant angular interval when the battery cell transported to the rotation path back in for re-inspection is inspected.
